Europäisches Patentamt

European Patent Office

Office européen des brevets

(11) Publication number: **0 368 501**
**A1**

## (12) EUROPEAN PATENT APPLICATION

(21) Application number: **89310875.3**

(22) Date of filing: **23.10.89**

(51) Int. Cl.5: **H04Q 11/06**

The title of the invention has been amended (Guidelines for Examination in the EPO, A-III, 7.3).

(30) Priority: **31.10.88 GB 8825434**
**07.03.89 GB 8905181**

(43) Date of publication of application:
**16.05.90 Bulletin 90/20**

(84) Designated Contracting States:
**AT BE CH DE ES FR GR IT LI LU NL SE**

(71) Applicant: **STC PLC**
**1B Portland Place**
**London W1N 3AA(GB)**

(72) Inventor: **Jessop, Anthony**
**48, Watlington Road**
**Harlow Essex(GB)**
Inventor: **Sexton, Michael James**
**47, Curlew Crescent**
**Basildon Essex(GB)**

(74) Representative: **Dupuy, Susan Mary et al**
**STC Patents West Road**
**Harlow Essex CM20 2SH(GB)**

(54) **Cross-connecting system.**

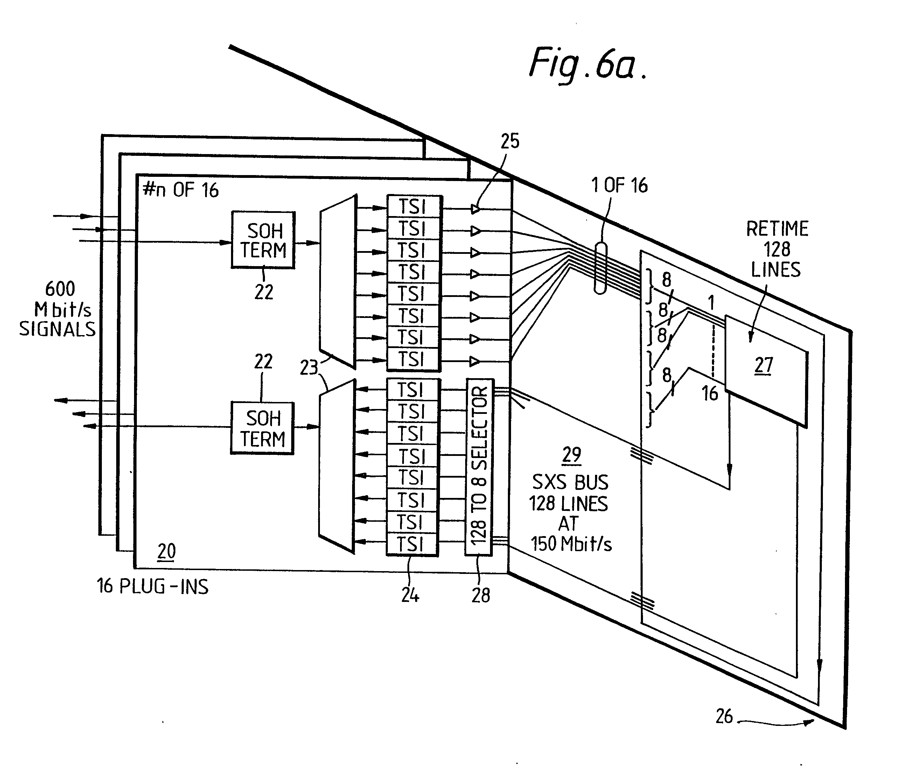

(57) A synchronous cross connect for a transmission network. In order to cross connect a plurality of digitial rates the rates are justified up to synchronous rates, the justified synchronous rates being chosen to have a specific whole number relationship with one another (harmonically justified). This allows a wide range of signals to be cross-connected in one array and results in a switch architecture (Fig. 6a) which gives near linear cost in growing from small to large switches.

Fig.4.

EP 0 368 501 A1

# TRANSMISSION NETWORKS.

This invention relates to transmission networks and in particular to synchronous cross connects and systems therefor.

The general objective of cross connect implementation is to support cross connection at defined digital rates, initially at least those rates already employed in real networks i.e. 1544, 2048, 6132, 34368, 44736 and 139264 Kbit/s.

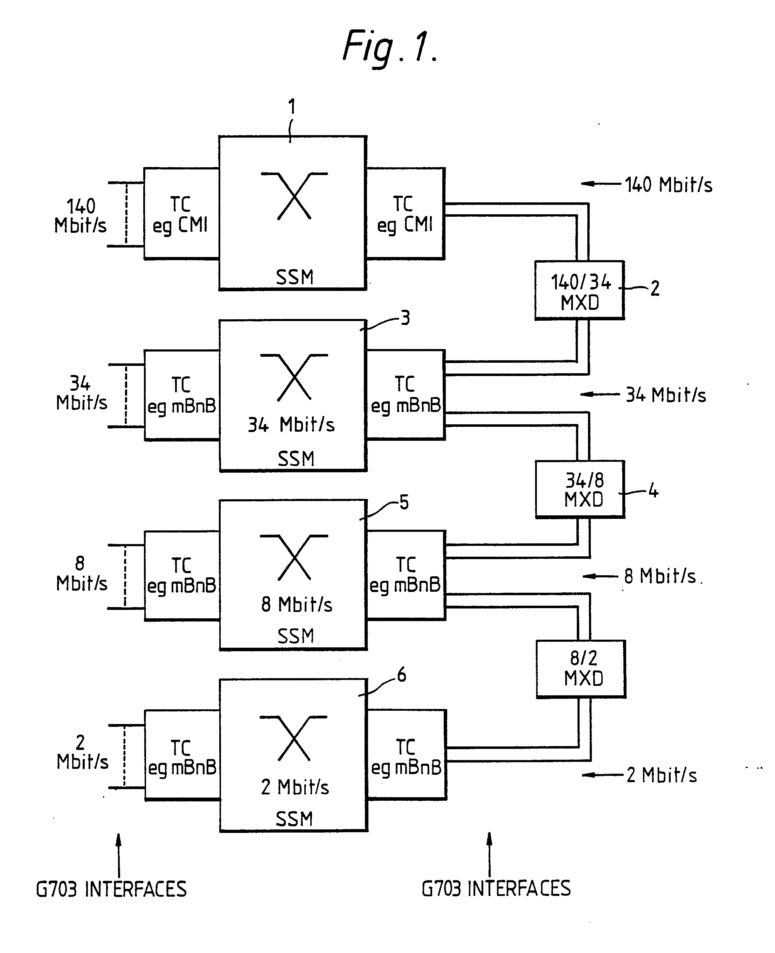

The following is given for background to the present invention. The plesiochronous nature (bit rates slightly different from nominal) of the existing digital hierarchies suggests a "simple" space switching solution. In this case the plesiochronous signal arising at a port is coded using well known transmission line coding techniques, "transmitted" through the cross connect structures and regenerated at the appropriate output port. The regeneration function includes clock recovery from the signal. Space switching structures are well known which are capable of high capacity, non blocking performance based on simple replication of some basic modules. Such structures are very large and cumbersome. Their very size compounds the transmission problems associated with their "internal" connections. The general principle for a multilevel (four-level) plesiochronous cross connect system is illustrated in Fig. 1 where TC stands for Transmission Coding; SSM stands for Space Switch Matrix; MXD stands for Multiplex/ Demultiplex; CMI stands for Coded Mark Inversion and mBnB stands for Binary to Binary Code, for example 3B6B or 5B6B. G703 is a CCITT designation. The ports indicated at the left hand side of Fig. 1 are bidirectional so that a 140 Mbit/s input signal can be cross connected back to a 140 Mbit/s port by SSM 1 or cross connected to a 34 Mbit/s port via. 140/34 MXD 2 and SSM 3 or to an 8 Mbit/s port in a 34/8 MXD 4 and SSM 5 etc.

The high density of interconnection between functional entities is the limiting factor in this type of architecture.

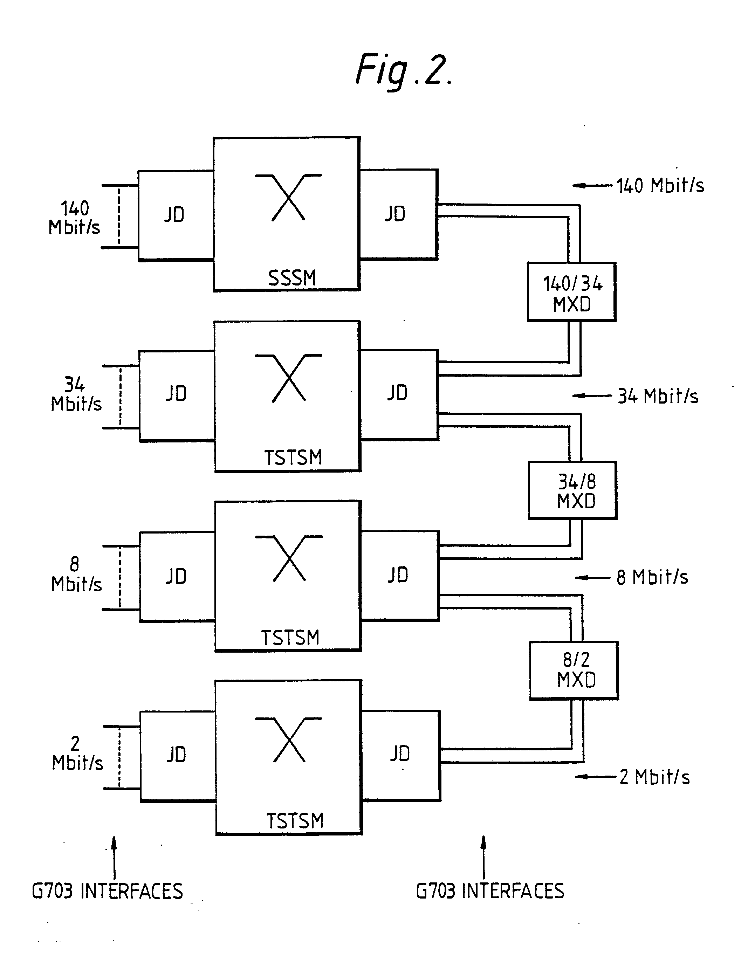

An alternative more effective implementation would employ justification of the plesiochronous interface signals to a synchronous rate determined within the cross connect system. A large number of such "synchronised" signals can be time multiplexed together in such a way that a time-space-time matrix structure can be implemented which will be smaller, cheaper etc. by virtue of the fact that the switching stages can be run at a higher speed but time shared between channels. Such an architecture is illustrated in Fig. 2, which illustrates a four-level plesiochronous cross connect system using justification and time shared switch matrices, where JD stands for Justification/Dejustification;

SSSM stands for Synchronous Space Switch Matrix and TSTSM stands for Time/Space/Time Switch Matrix, other designations being as Fig. 1. It is likely that the size and cost of the basic switch matrices could be significantly less than those of Fig. 1 except for the 140 Mbit/s top level which would be very similar. In particular the internal connections within a switch matrix would be significantly reduced in number although operating at a higher rate. The architecture of Fig. 2 combined with more integrated multiplex/demultiplex configurations, such as "skip mux", "jump mux" etc, can be expected to provide reasonably cost effective implementations at the present time and in the immediate future.

According to one aspect of the present invention there is provided a cross connect system characterised in that for cross connecting a plurality of digital rates the rates are justified up to synchronous rates, the justified synchronous rates being chosen to have a specific whole number relationship with one another whereby all cross connects are permitted to be in a single array.

According to another aspect of the present invention there is provided a synchronous cross connect system consisting of cross connect modules and interface units connected together and controlled from a control computer, and characterised in that for cross connecting a plurality of digital rates the rates are justified up to synchronous rates, the justified synchronous rates being chosen to have a specific whole number relationship with one another whereby a wide range of signals can be cross connected in one array.

Embodiments of the invention will now be described with reference to the accompanying drawings, in which:

Figure 3 illustrates a four level plesiochronous cross connect system using harmonic justification and a time shared space switch matrix;

Figure 4 illustrates a synchronous digital cross-connect system according to one aspect of the present invention;

Figure 5a illustrates the logical representation of a fully equipped space switching matrix, and

Figure 5b illustrates the logical representation of a full equipped time-space-time switch;

Figure 6a illustrates the physical structure of time-space-time switch unit, and

Figure 6b illustrates the physical structure of single stage space switch.

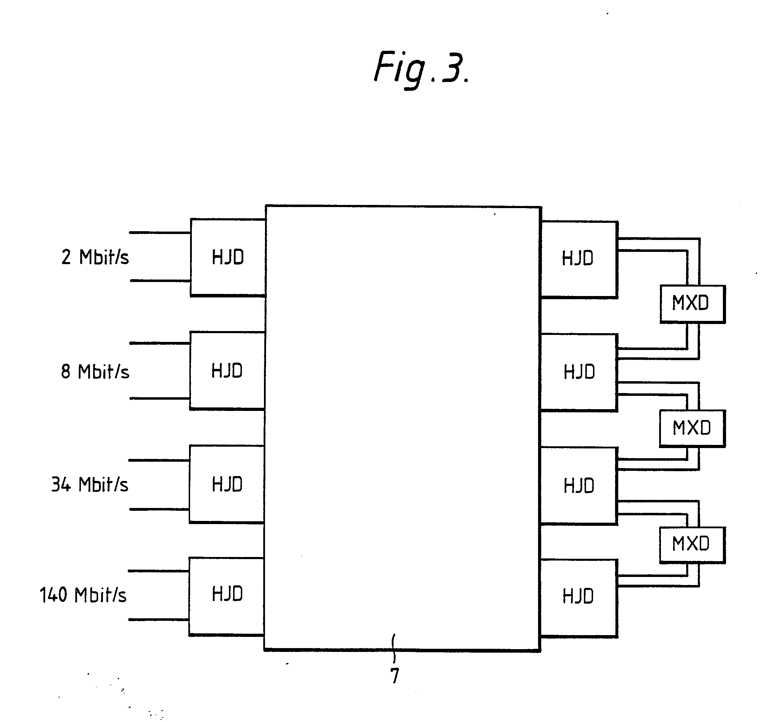

In contrast to the arrangements of Figs 1 and 2, the present invention is concerned with obtaining extra flexibility and further potential cost saving from more efficient usage of plant. This can be achieved if the justified signal rates of Fig. 2 are chosen to be harmonically related, i.e. have a specific whole number relationship with one another. If this is the case then justified 2 Mbit/s signals can be time multiplexed into the same stream as justified 8 Mbit/s signals and/or 34 Mbit/s signals and can, therefore, be cross connected in the same switch matrix (single array) provided appropriate control functionality is provided in the switch matrix. For instance 2048kbit/s signals may be justified to 2304kbit/s; 8448kbit/s to 9216k/bits; 34 368kbit/s to 36 864kbit/s and 13926kbit/s to 147456k/bits. Thus generating a series of synchronous signals in the ratio 1:4:16:64. The 147 456kbit/s rate can be the basic operating rate of a cross connect core (this signal is referred to later as the synchronous cross connect signal SXS). Other more complex structures can be generated to include the signal rates 1544kbit/s and 44736kbit/s. The principles of such an architecture are shown in Fig. 3 for an extreme example where all four levels use the same core (time shared space switch matrix 7). HJD represents Harmonic Justification/Dejustification.

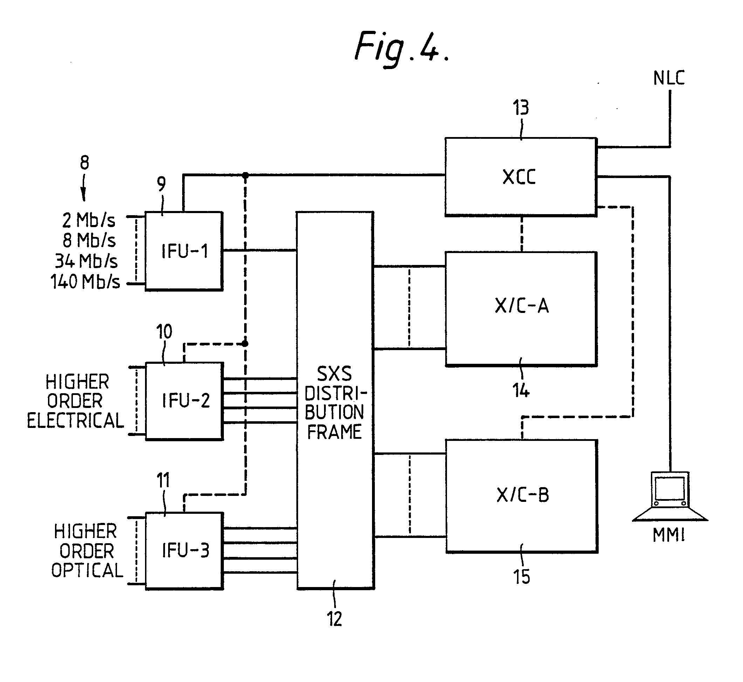

The present invention proposes a synchronous cross connect system consisting of core cross connect modules and interface units connected together and controlled from a control computer (XCC) 13. This concept is illustrated in Fig. 4. Signals are coupled· to interface units IFU 1, 2, 3, (9, 10, 11) which have bidirectional ports, as referred to with respect to Fig. 1, and may perform the function of Optical Line Terminations. In addition to standard transmission functions the interface units multiplex/demultiplex/justify/dejustify or otherwise process the signals 8 (Fig. 4) such that they are synchronised to the bit rate and possibly the frame of the cross connect switch. The signals as referred to above is termed the Synchronous Cross Connect Signal or SXS. In the example illustrated in Fig. 4 a multiplicity of SXS are applied to the cross connect core function via the SXS distribution frame functionality 12.

In Fig. 4 there are 2 cross connect core modules 14, 15(X/C -A and X/C -B) the traffic signals from the interfaces being connectible to each via the element 12 which provides SXS distribution frame functionality. The controller function 13 controls the interfaces 9, 10, 11 and selects routes through the cross connects 14, 15 to achieve a particular required cross connection thereat, which cross connection is maintained by that X/C until the controller 13 directs otherwise.

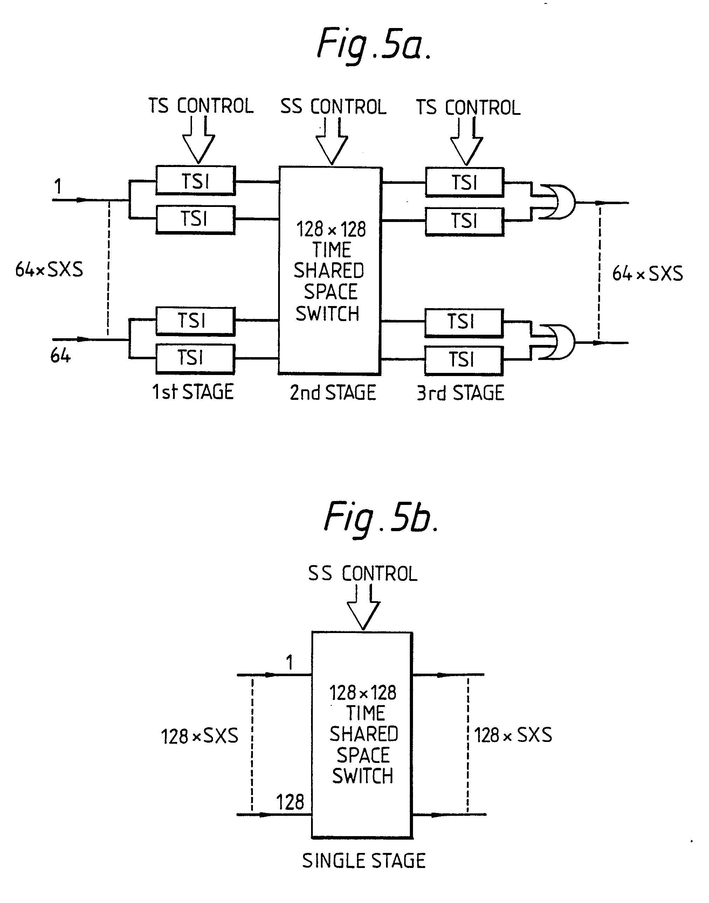

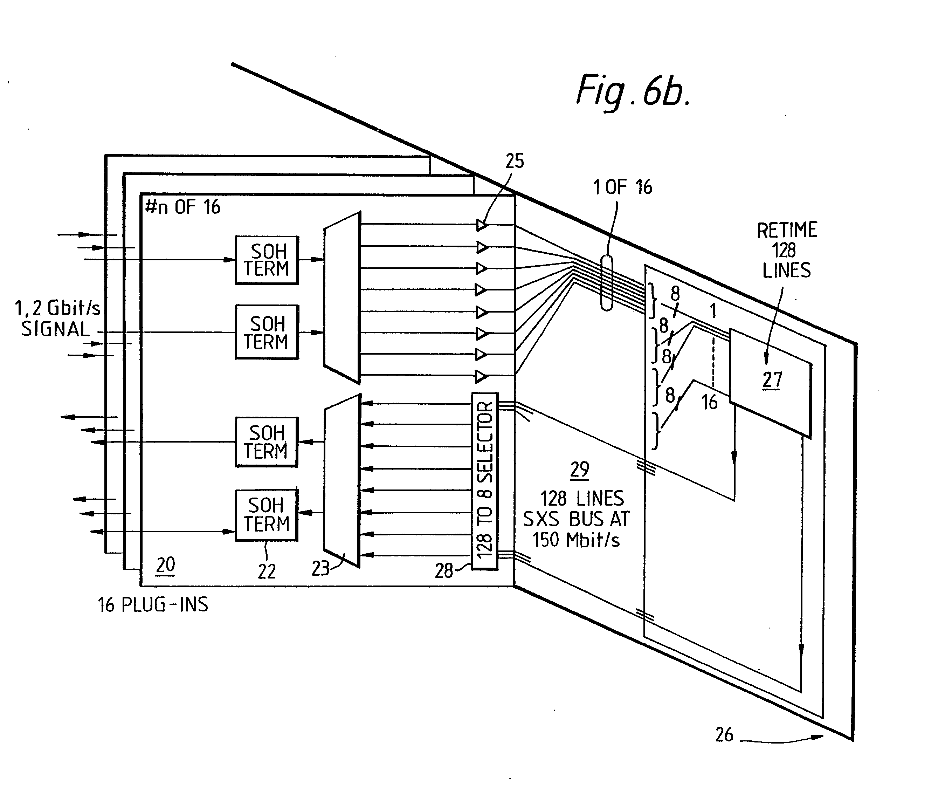

In Fig. 4 the signals from the interface units are illustrated as applied via the SXS distribution frame to either of the two, as illustrated, switch card variants X/C -A and X/C -B. X/C -A is a cross connect which only switches the whole of a SXS and hence is simply a space switch and if, for example, it is implemented as shown in Figs. 5b and 6b as a single stage 128 X 128 space switch, it is inherently non-blocking and would have a capacity of 128 times the SXS rate.

X/C -B is a cross connect which switches signals within a SXS, hence the space switch is used in time division and TSI's (Time Slot Interchangers) are required. In order to overcome path blocking associated with multistage switching duplicates are provided through the space switch as illustrated in Fig. 5a. Such a switch would have capacity of 64 times the SXS rate.

The X/C -B Cross Connection Core will now be considered. A logical representation of the fully equipped X/C -B is illustrated in Fig. 5a. The SXS signals received at the input have already been phase aligned to the local frame reference and contain synchronous tributary signals. The TSI (Time Slot Interchanger) functions of the first stage switch form a single stage rectangular time switch whose size can be provisioned according to the signal content of the SXS. The maximum case is when the SXS is entirely made up of the smallest tributary signals (e.g. 1544kbit/s or 2048kbit/s). In the case of 2048kbit/s the switch has 64 inputs and 128 outputs. This can be constructed in a similar manner to that shown in Fig. 5a. At the other extreme, if the SXS is made up of justified 34mbit/s tributary signals and is to be switched as such, then the time switch is provisioned (inefficiently) as four input, eight output. The 2 to 1 expansion is a feature of standard Clos architecture which guar-· antees unconditional non blocking. The second stage as illustrated consists of a 128 X 128 port, time shared space switch. It can scan through up to 64 independent configurations in one STM1 frame to coincide with the synchronous tributaries presented to it. The third stage time switch is connected in an inverse arrangement to the first stage, having up to 128 inputs and 64 outputs.

The precise scanning sequences for each SXS type are different but very similar and can be relatively simple programmable counters and address generators.

The three stage switch is folded to form a duplex switch with terminated capacity equivalent to 64 SXS.

It is worth noting at this point that although the description above is for a structure capable of cross connecting the full range of synchronised tributaries and indeed will allow synchronised tributaries of different order to the cross connected simultaneously in the same core, it is rather wasteful if a large number of high order synchronised tributaries are switched this way. However, the basic structure can be optimised for switching different order synchronised tributaries simply by reducing the dimensions of the three stages . A cross connect used only for switching whole SXS, for instance, would have no TSI at all (i.e. a 1 port TSI) and the space switch would be static (i.e. not time shared). A single stage space switch such as this can be made fully available (i.e. Clos doubling is not required) and hence has double the capacity of an X/C -B. Fig. 5b shows the logical representation of such a structure

An implementation for the physical structure of a multiple level cross connect is illustrated in Fig. 6a. The complete structure is implemented in one shelf with up to sixteen identical switch cards 20. Each switch card processes four multiplexed SXS; includes section overhead (SOH) 22 and provides the synchronising function; it multiplexes from or demultiplexes to SXS 23 and performs the 16 x 64 port TSI functions 24. These comprise the first and third stage switching functions. The second stage switch is formed by the 8 line drivers 25, the back plane 26, the retiming function 27 and the 128 to 8 line decoder 28. Each switch card (16 in all) sends 8 X SXS to the retiming function 27. All 128SXS so received are retimed from a single clock and are launched into a 128 line bus 29. Each switch card then has access to all 128 lines. The second stage is completed by the selector (decoder) 28 which selects any 8 from the 128 lines available dynamically under the control of a configuration memory.

Fig. 6b shows a similar arrangement which includes extra section overhead (synchronisation) function 22. In the case of SXS switching these allow twice the capacity (1.2Gbit/s per card) to be presented. The TSI functions are not required in this case and the overall 16 card structure is thus a nominally 20 Gbit/s SXS cross connect.

The basic structure of Figs. 6a and 6b has a number of useful properties, namely:

(a) Growth is easily and elegantly achieved and is very close to linear (in cost) in 16 increments of switch card. An initial installation of 600 Mbit/s capacity consists of one switch card 20, one shelf control unit, the retiming function 27 and the PSU (power supply unit) shelf and back plane 26 itself. A simple extension to the basic installation by adding a further switch card will double the capacity;

(b) the different SXS mapping variants can pass simultaneously through the cross connect, providing of course that compatible connections are made;

(c) switch cards optimised for simple SXS switching can be connected to the same back plane as switch cards optimised for tributary switching.

**Claims**

1. A cross connect system characterised in that for cross connecting a plurality of digital rates the rates are justified up to synchronous rates, the justified synchronous rates being chosen to have a specific whole number relationship with one another whereby all cross connects are permitted to be in a single array (7).

2. A system as claimed in claim 1 and characterised by a single stage space switch (14; Fib 5b) which in use switches the whole of a synchronous cross connect signal.

3. A system as claimed in claim 2 and characterised by one or more switch cards (20) associated with a back plane (26) having a respective multiline input bus for each switch card, a common retiming function (27) and a common multiline output bus (29), the or each switch card (20) serving to terminate signals input thereto and provide synchronisation thereof and multiplexing from/demultiplexing to the synchronous cross connect signal.

4. A system as claimed in claim 1 and characterised by a three stage time-space-time switch (15; Fig 5a) which in use switches signals within a synchronous cross connect signal.

5. A system as claimed in claim 4 and characterised by one or more switch cards (20) associated with a back plane (26) having a respective multiline input bus for each switch card, a common retiming function (27) and a common multiline output bus (29), the or each switch card serving to terminate signals input thereto and provide synchronisation thereof, multiplexing to or demultiplexing from the synchronous cross connect signal and time slot interchange functions, the first and third stage switching functions being provided by the switch cards and the second stage being provided by line drivers (25) of the switch cards, the back plane (26) and a decoder (28) of the switch cards.

6. A system as claimed in claim 8 or claim 10 which in a basic form includes one said switch card and in which linear growth in cost terms is achieved with increments of switch cards.

7. A synchronous cross connect system consisting of cross connect modules (14, 15) and interface units (9, 10, 11) connected together and controlled from a control computer (13), and characterised in that for cross connecting a plurality of digital rates the rates are justified up to synchronous rates, the justified synchronous rates being chosen to have a specific whole number relationship with one another whereby a wide range of signals can be cross connected in one array (7).

8. A system as claimed in claim 1 characterised in that the interface units (9, 10, 11) are connected to the cross connect modules (14, 15) via a synchronous cross connect signal distribution frame (12).

9. A system as claimed in claim 1 or claim 2 characterised in that a said cross connect module is a space switch (14; Fig 5b) and in use switches the whole of a synchronous cross connect signal.

10. A system as claimed in claim 1 or claim 2 characterised in that a said cross connect module is a time-space-time switch (15; Fig 5a) and in use switches signals within a synchronous cross connect signal.

# Fig.1.

# Fig.2.

140 Mbit/s — JD — SSSM — JD — ← 140 Mbit/s

140/34 MXD

34 Mbit/s — JD — TSTSM — JD — ← 34 Mbit/s

34/8 MXD

8 Mbit/s — JD — TSTSM — JD — ← 8 Mbit/s

8/2 MXD

2 Mbit/s — JD — TSTSM — JD — ← 2 Mbit/s

G703 INTERFACES                    G703 INTERFACES

# Fig.3.

# Fig.4.

NLC

13

XCC

8

9

2 Mb/s
8 Mb/s
34 Mb/s
140 Mb/s

IFU-1

10

HIGHER
ORDER
ELECTRICAL

IFU-2

SXS
DISTRI-
BUTION
FRAME

X/C-A

14

11

HIGHER
ORDER
OPTICAL

IFU-3

X/C-B

15

12

MMI

A.JESSOP ET AL 10-6>

# Fig.5a.

TS CONTROL     SS CONTROL     TS CONTROL

| | | |
|---|---|---|
| TSI | | TSI |
| TSI | 128 × 128 TIME SHARED SPACE SWITCH | TSI |
| TSI | | TSI |
| TSI | | TSI |

1

64 × SXS

64

64 × SXS

1st STAGE     2nd STAGE     3rd STAGE

# Fig.5b.

SS CONTROL

1

128 × SXS

128 × 128 TIME SHARED SPACE SWITCH

128 × SXS

128

SINGLE STAGE

Fig.6a.

# Fig.6b.

25

1 OF 16

#n OF 16

RETIME
128
LINES

SOH
TERM

SOH
TERM

1,2 Gbit/s
SIGNAL

8

8
8

8

1

16

27

SOH
TERM

SOH
TERM

128 TO 8 SELECTOR

29
128 LINES
SXS BUS AT
150 Mbit/s

20

22

23

28

16 PLUG-INS

26

EP 0 368 501 A1

A. JESSOP ET AL 10-6〉

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | IEEE JOURNAL ON SELECTED AREAS IN COMMUNICATIONS, vol. SAC-5, no. 1, January 1987, pages 26-32, IEEE, New York, US; K.P. KRETSCH et al.: "A digital cross-connect system for digital data circuits" * Page 27, right-hand column, line 9 - page 30, left-hand column, line 22; figures 3-5 * | 1,2,4,7 -10 | H 04 Q 11/06 |
| Y | IDEM | 3,5,6 | |
| Y | EP-A-0 231 630 (STC) * Figures 1,2,4; column 3, lines 41-48 * | 3,5,6 | |
| X | EP-A-0 263 418 (NEC) * Page 7, line 43 - page 8, line 39; figures 8,10 * | 1-3,7, 10 | |
| A | | 4-6 | |
| X | REVIEW OF THE ELECTRICAL COMMUNICATIONS LABORATORIES, vol. 36, no. 1, January 1988, pages 41-48; I. TOKIZAWA et al.: "An advanced multimedia TDM system for closed networks" * Whole document *          -/- | 1,2,4,7 -10 | **TECHNICAL FIELDS SEARCHED (Int. Cl.5)** H 04 Q |

The present search report has been drawn up for all claims

| Place of search | Date of completion of the search | Examiner |
|---|---|---|
| THE HAGUE | 30-01-1990 | KURVERS F.J.J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)

European Patent Office

**EUROPEAN SEARCH REPORT**

Application Number

EP 89 31 0875

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | IEEE GLOBAL TELECOMMUNICATIONS CONFERENCE, CONFERENCE RECORD, 1st-4th December 1986, Houston, TX, vol. 2, session 33, pager 3, pages 1185-1189, IEEE, New York, US; A. AVENEAU et al.: "A versatile data multiplexer and cross-connector N*64/2048 kbit/s: BMX 264"<br>* Page 1, right-hand column - page 2, left-hand column, line 6; page 3, left-hand column, figure 1 * | 1,2,7 | |
| | | | **TECHNICAL FIELDS SEARCHED (Int. Cl.5)** |

The present search report has been drawn up for all claims

| Place of search | Date of completion of the search | Examiner |
|---|---|---|
| THE HAGUE | 30-01-1990 | KURVERS F.J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)